# EUROPÄISCHE PATENTSCHRIFT

(11) **EP 1 040 273 B1**
(45) Veröffentlichungstag und Bekanntmachung des Hinweises auf die Patenterteilung: **22.01.2003**
(21) Anmeldenummer: 98958119.4
(22) Anmeldetag: 27.11.1998
(51) Int. Cl.: F04B 39/10

(54) **DRUCKVENTILFEDER**
PRESSURE VALVE SPRING
RESSORT DE SOUPAPE DE REFOULEMENT

(30) Priorität: 17.12.1997 AT 213497
(43) Veröffentlichungstag der Anmeldung: 04.10.2000
(73) Patentinhaber: Verdichter OE. GesmbH, 8280 Fürstenfeld (AT)
(72) Erfinder: BRABEK, Walter, A-8380 Jennersdorf (AT); SCHÖLGER, Hans, Peter, A-8350 Fehring (AT)
(74) Vertreter: Kliment, Peter
(86) Internationale Anmeldenummer: AT9800289
(87) Internationale Veröffentlichungsnummer: WO99031387

(56) Entgegenhaltungen:
- DE-A- 1 503 406
- DE-A- 3 305 791
- GB-A- 891 313
- GB-A- 2 296 961
- US-A- 5 110 272
- US-A- 5 209 260

## Beschreibung

Die Erfindung bezieht sich auf ein Druckventil für einen Verdichter gemäß Anspruch 1.

Druckventile dieser Art befinden sich auf der Druckseite von Verdichtern. Bei bekannten Druckventilen nach dem Stand der Technik sind über einer Druckbohrung einer Ventilplatte eine Ventilfeder, nicht notwendigerweise ein Dämpferelement und ein Niederhalterelement angeordnet, ein Element über dem anderen. Alle Elemente befinden sich dabei in dem von ventilplatte und Zylinderdeckel umschlossen Volumen, wobei beide mittels Schrauben am Zylinder befestigt sind. Beim Verdichtungszyklus des Verdichters öffnet die Ventilfeder durch den Druck des Mediums in der Druckbohrung und die Feder klappt nach oben . Sie wird dabei nicht notwendigerweise von einem Dämpferelement gebremst. Der Hub der Ventilfeder wird ebenfalls nicht notwendigerweise durch ein Niederhalterelement begrenzt. Ist der Verdichtungszyklus beendet, klappt die Feder aufgrund der Federkraft und des Druckunterschieds wieder über die Druckbohrung und verschließt diese.

In der US-A-5 110 272 ist ein Druckventil offenbart, welches eine Ventilfeder, ein Dämpferelement und ein Stifte aufweisendes Niederhalterelement aufweist. Gravierender Nachteil gegenüber dem erfindungsgemäßen Druckventil ist die Tatsache, daß in der Ventilplatte eine Vertiefung vorhanden ist, welche die Bearbeitung, erschwert und zusätzlich das Niederhalterelement mittels Nieten an der Ventilplatte befestigt werden muß. Gegenüber dem erfindungsgemäßen Druckventil bedeutet dies bei einer Stückzahl von mehreren Millionen pro Jahr eine wesentlich längere Fertigungszeit und wesentlich mehr Material, das verarbeitet werden muß.

In der DE 33 05 791 A1 ist ebenfalls ein Druckventil für einen Verdichter offenbart, bei dem die Ventilplatte eine längliche Vertiefung aufweist, in die ein Einsatz eingesetzt ist, an dem Stifte angeordnet sind. Diese Stifte stehen normal zur Ebene der Ventilplatte und des Einsatzes. Die Ventilfeder, das Dämpferelement und die Niederhalterelemente sind mit Ausnehmungen versehen, die mit diesen Stiften in Eingriff bringbar sind. Dadurch werden diese Elemente in Ihrer Position fixiert.

Der Nachteil bei dieser Art von Druckventil ist die aufwendige Fertigung. Auf der Ventilplatte muss zuerst eine längliche Vertiefung ausgefräst werden, wobei darauf geachtet werden muss, dass die Oberflächenrauheit am Ventilsitz die angegebenen Toleranzen nicht überschreitet. In weiterer Folge muss jedoch ein Einsatz gefertigt werden, der in die zuvor ausgefräste längliche Vertiefung eingesetzt wird. Jenes Werkstoffvolumen, dass zuerst spanend beseitigt wird, wird dann wieder teilweise aufgefüllt. Das gesamte Druckventil umfasst außerdem einen Einsatz, eine Ventilfeder, eine Zusatzblattfeder, eine Fangplatte sowie eine Brückenfeder, somit fünf Teile welche einen erheblichen Montageaufwand bedeuten.

Weiters sind Druckventile bekannt, deren Ventilplatte keine Vertiefung aufweist, sondern wo die Ventilfeder, das Dämpferelement und der oder die Niederhalterelemente mittels Nieten an der Ventilplatte befestigt sind. Eine derartige Konstruktion bedeutet jedoch ebenfalls einen zusätzlichen Fertigungsaufwand, da mindestens eine Nietmaschine zum Einsatz kommen muss. Außerdem ist das Zerlegen dieser Anordnung für Reparaturzwecke aufgrund der Nieten erschwert wenn nicht gar unmöglich. Eine Vormontage der Ventilplatte samt Ventilfeder, Dämpferelement und Niederhalterelement ist nicht möglich, da es sich dabei um lose zusammengesteckte Teile handelt, die ein einfaches Handling der so entstehenden Einheit nicht ermöglicht.

In der DE-AS 1 503 406 ist eine Ventilanordnung offenbart, bei der oberhalb einer Druckventilblattfeder eine Anschlagplatte und eine Spannblattfeder angeordnet sind. Diese Elemente sind mit zwei Stiften im Eingriff die in Bohrungen in der Ventilplatte und im Zylinderdeckel stecken und so den Zusammenhalt der Anordnung gewährleisten Gegenüber der vorliegenden Erfindung ergeben sich zwei besondere Nachteile. Die aufwendige Befestigung der Druckventilblattfeder mittels vier Teilen statt einem Teil wie bei der vorliegenden Anmeldung, führt zu einem wesentlich höherem Herstellungsaufwand und erhöht die Wahrscheinlichkeit des Versagens des gesamten Druckventils. Die öffnende Ventilfeder erfährt keine Dämpfung, wogegen in der vorliegenden Anmeldung die Möglichkeit der Anbringung eines Dämpferelementes berücksichtigt wurde. Weiters handelt es sich bei dem in dieser Auslegungsschrift offenbarten Druckventil um ein zu dieser Anmeldung unterschiedliches Prinzip der Ansaugung-Verdichtung. In der DE-AS 1 503 406 sind zwei getrennte Saugschallkammern offenbart, sowie eine zentrale Druckbohrung. Die führt zu einer größeren Sauggasvorwärmung, was wiederum zu eine erhöhten aufzuwendenden Verdichtungsarbeit führt.

Ziel der vorliegenden Erfindung ist es, ein Druckventil vorzusehen, dass die vorher beschriebenen Nachteile vermeidet und einfaches Zusammenstecken der verschiedenen Bauteile ermöglicht, welches gleichzeitig die Ventilfeder, das Dämpferelement und das Niederhalterelement, aneinander ohne zusätzliche Hilfsmittel befestigt, den Fertigungsaufwand entscheidend verringert und die Versagenswahrscheinlichkeit minimiert.

Diese Aufgabe wird bei einem Druckventil für Verdichter der eingangs erwähnten Art durch die kennzeichnenden Merkmale des Anspruchs 1 erreicht.

Durch die plane Fertigung der Ventilplatte entfällt ein kompletter Arbeitsgang. Die spezielle Anordnung der Stifte am Niederhalterelement gegenüber den korrespondierenden Bohrungen in der Ventilplatte ermöglicht das Fixieren des Niederhalterelementes, der Ventilfeder und der Dämpferelementes an der Ventilplatte, wodurch zusätzliche Befestigungen wie Nieten nicht erforderlich sind und somit nicht nur Gewicht (Material) eingespart wird, sondern wiederum die Herstellzeit verkürzt werden kann.

Gemäß Anspruch 2 wird das Niederhalterelement nach dem Zusammenbau des Druckventils durch den Zylinderdeckel in seinem Mittelbereich gegen die Ventilplatte gedrückt, um das Lösen des Niederhalterelementes durch betriebsbedingte Vibrationen zu verhindern.

Anspruch 3 und 4 verhindert das falsche Montieren des Niederhalters an der Ventilplatte durch die asymmetrische Form. Verwechslungen bezüglich der Einsteckrichtung sowie Schwierigkeiten bezüglich der Ventilfeder und des Dämpferelementes, die durch die falsche Montage entstehen, können aufgrund der Tatsache, dass nur eine Einsteckrichtung möglich ist, ausgeschlossen werden. Weiters ermöglichen die am Niederhalterelement ausgeformten Stifte eine genaue Positionierung der Ventilfeder bzw. des Dämpferelementes.

Die Ansprüche 5 bis 8 ermöglichen ein stabiles Befestigen sowohl des Niederhalterelementes an der Ventilplatte als auch der Ventilfeder bzw. des Dämpferelementes an den Stiften des Niederhalterelementes. Ein Verrutschen dieser Bauteile nach Zusammenbau der Ventilplatte mit dem Zylinderdeckel ist somit nicht mehr möglich.

Im folgenden wird die Erfindung an Hand eines in den Zeichnungen dargestellten Beispiels näher beschrieben.

Dabei zeigen:
- Fig. 1: eine Schnittansicht eines Verdichters in dem ein erfindungsgemäßes Druckventil zum Einsatz kommt
- Fig. 2: einen Auf- und Grundriß eines erfindungsgemäßen Niederhalterelementes
- Fig. 3: einen Grundriß einer Ventilfeder
- Fig. 4: einen Auf- und Grundriß eines Dämpferelementes
- Fig. 5: einen Auf- und Grundriß einer erfindungsgemäßen Ventilplatte
- Fig. 6.: eine Schnittansicht und einen Grundriß eines erfindungsgemäßen Zylinderdeckels
- Fig.7: eine Untersicht des Zylinderdeckels
- Fig.8: eine Zusammenstellungsansicht eines erfindungsgemäßen Druckventils

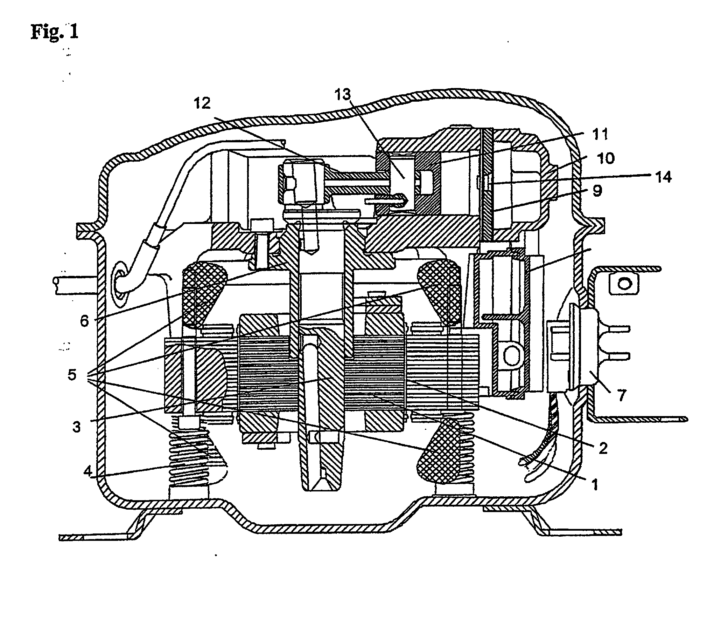

Fig.1 zeigt eine Schnittansicht durch einen Verdichter nach dem Stand der Technik. Über einen Elektromotor mit Rotor 1, Luftspalt 2 und Statorwicklungen 5, der auf Druckfedern 4 gelagert ist und über die Stromdurchführung 7 mit Strom versorgt wird, ist eine Kurbelwelle 3 angetrieben, die über einen Pleuel 12 einen Kolben mit Kolbenbolzen 13 antreibt. Dieser drückt das verdichtete Medium über eine Druckbohrung in der Ventilplatte 9 in den Raum zwischen Ventilplatte 9 und Zylinderdeckel 10, von wo es über eine Druckleitung wieder dem Mediumkreislauf zugeführt wird.

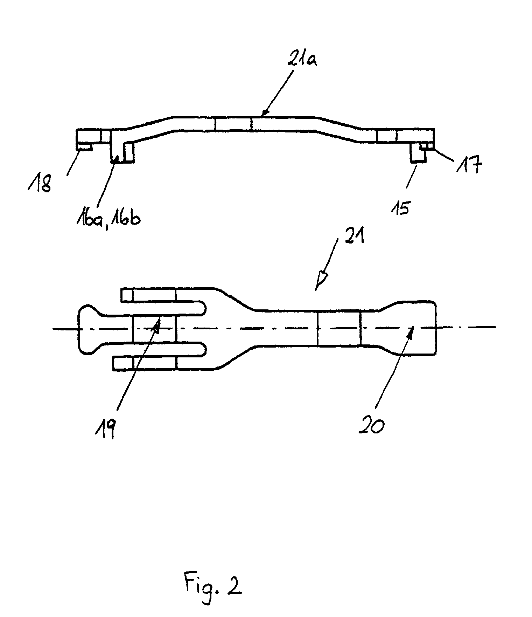

In Fig. 2 ist ein erfindungsgemäßes Niederhalterelement 21 ersichtlich. Ein Endbereich 19 ist gabelförmig ausgebildet, der andere Endbereich 20 zungenförmig. Stifte 18, 16a und 16b sind an der Unterseite des gabelförmigen Endbereiches 19 angeordnet. Im zungenförmigen Endbereich 20 sind ebenfalls Stifte 15 und 17 an der Unterseite angeordnet. Sämtliche Stifte stehen im wesentlichen senkrecht zur Ebene des Niederhalterelementes. Erfindungsgemäß ist der Abstand der Stifte voneinander geringfügig unterschiedlich dem Abstand der Bohrungen 35 voneinander in der Ventilplatte 33 zur Aufnahme der Stifte. Dadurch ergibt sich beim Aufstecken des Niederhalterelementes 21 auf die erfindungsgemäße plane Ventilplatte eine Vorspannung, die das Halten der Elemente auf der Ventilplatte auch ohne Zylinderdeckel garantiert. Das Niederhalterelement weist nach bekannter Art einen U-förmigen Querschnitt mit ausgewinkelten Schenkeln (Endbereiche 19 und 20) auf.

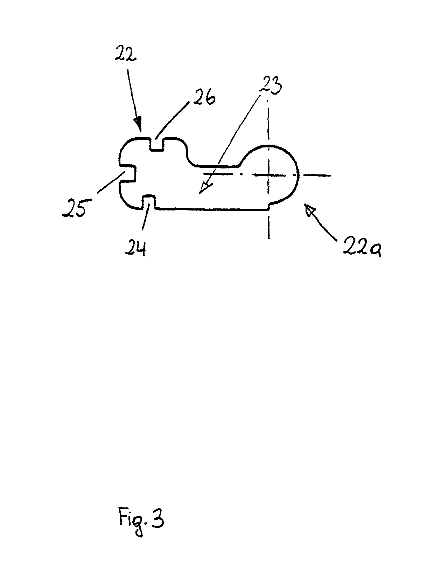

Fig. 3 zeigt eine Ventilfeder 23. Im Endbereicht 22 sind Ausnehmungen 24, 25, 26 vorgesehen, wobei die Ausnehmungen 24 und 26 an der Längsseite der Ventilfeder und Ausnehmung 25 stirnseitig angeordnet ist. Der andere Endbereich 22a ist kreisförmig ausgeführt.

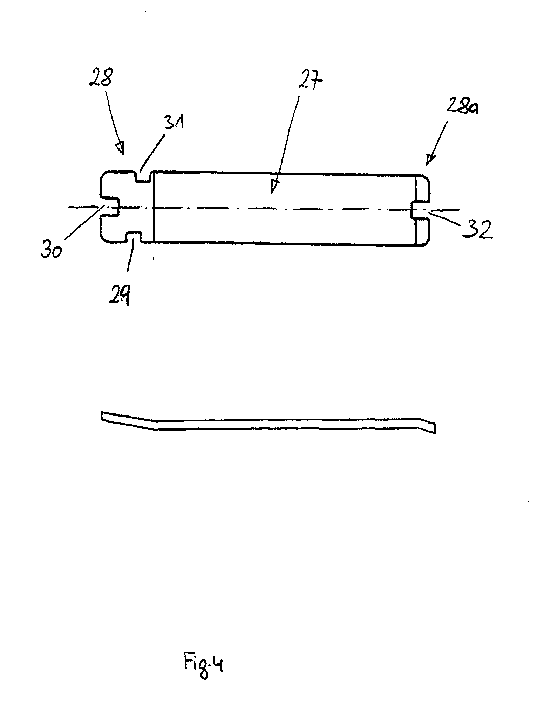

In Fig. 4 ist ein Dämpferelement 27 ersichtlich, das in seinen Endbereichen 28 und 28a in jeweils entgegengesetzten Richtungen aufgebogen ist. Im Endbereich 28 sind entsprechende Ausnehmungen 29, 30 und 31 vorgesehen, wobei die Ausnehmungen 29 und 31 and den Längskanten des Dämpferelementes 27 angeordnet sind und die Ausnehmung 30 an der Stirnseite. I Endbereich 28 Sind entsprechende Ausnehmungen 29, 30 an der Stirnseite. Im Endbereich 28a ist ebenfalls eine stirnseitig angeordnete Ausnehmung 32 angeordnet.

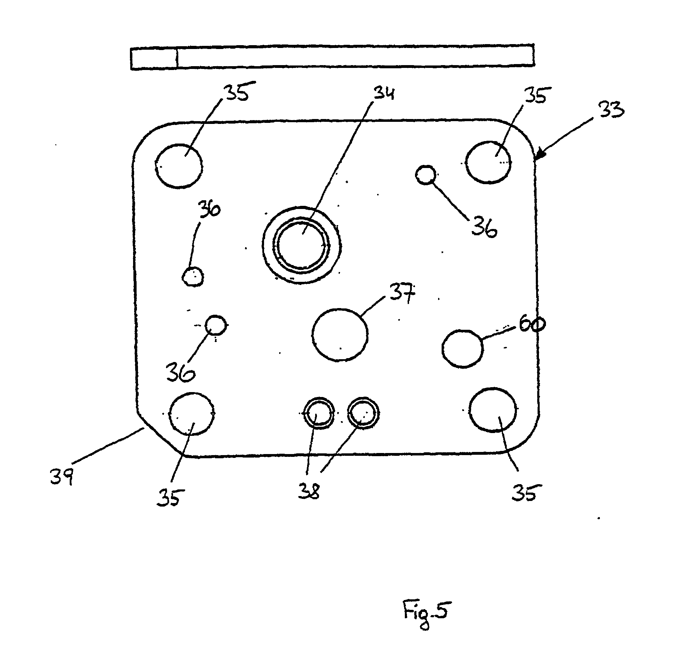

Fig. 5 zeigt eine Auf- und Grundriß einer erfindungsgemäßen im wesentlichen viereckigen Ventilplatte 33. Auf einer komplett ebenen Platte sind eine Druckventilöffnung mit Ventilsitz 34, Befestigungsöffnungen 35 für die Verbindung mit dem Zylinderdeckel, Niederhalterelementbefestigungsöffnungen 36, eine Saugventilöffnung 37 sowie Befestigungsöffnungen 38 für den Saugschalldämpfer ausgeführt. Eine Ecke 39 der Ventilplatte ist abgeschrägt.

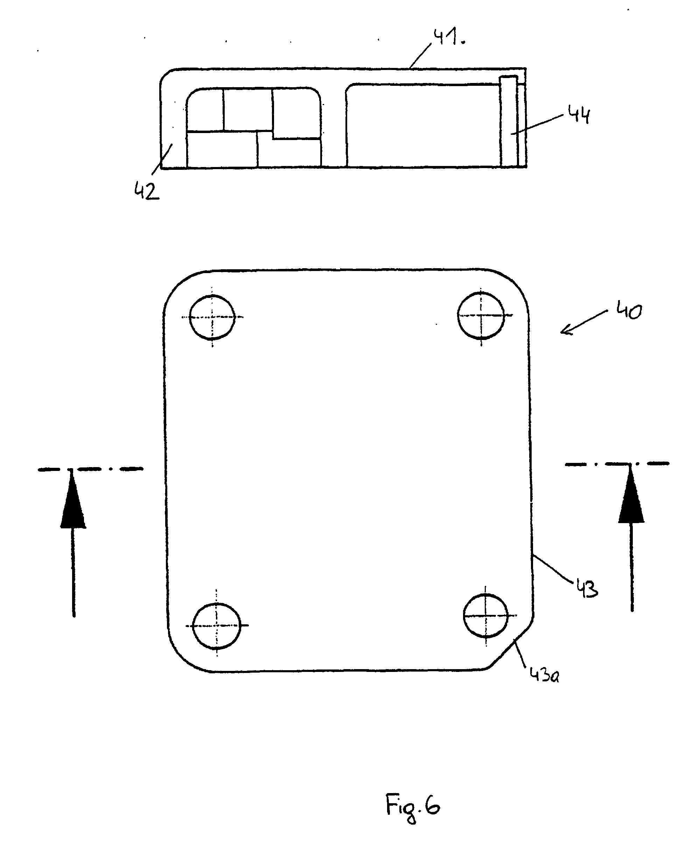

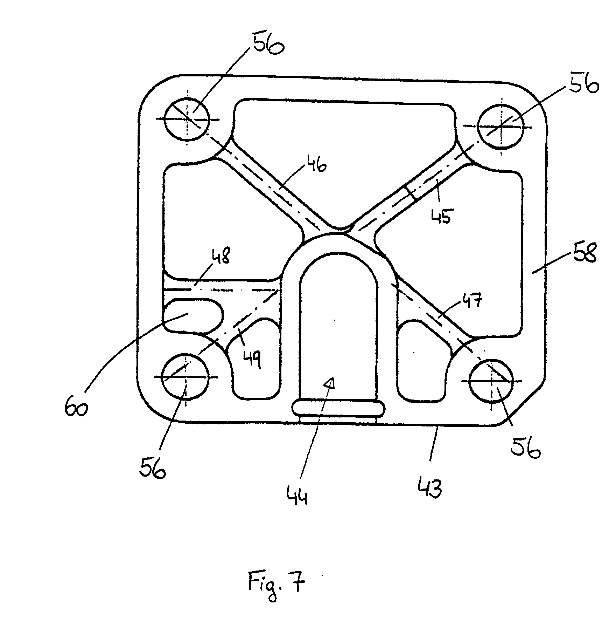

Fig. 6 und 7 zeigen Schnittansichten und Grundrisse eines erfindungsgemäßen Zylinderdeckels 40. An einer im wesentlichen viereckigen Grundplatte 41 ist eine Zylinderdeckelwand 42 angeförmt, die in der Mitte einer Seite 43 des Zylinderdeckels eine Durchlass 44 aufweist, durch den die Ansaugung des Mediums erfolgt. An der Innenseite des Zylinderdeckels 41 sind Stege 45,46,47,48,49 ausgebildet. Zusätzlich sind am Zylinderdeckel Bohrungen 56 zur Befestigung mit der Ventilplatte ausgebildet sowie eine Dichtung 58 angebracht.

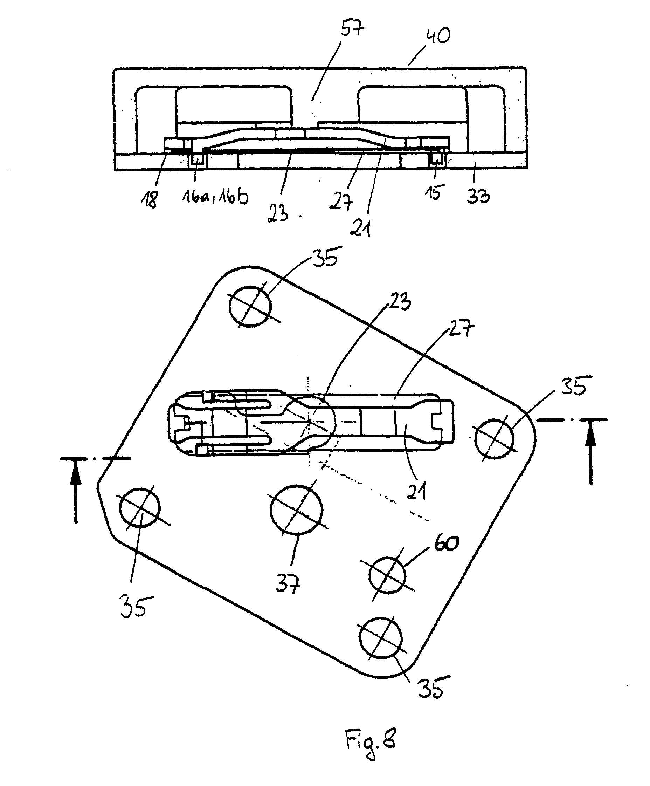

In Fig. 8 ist eine Zusammenstellungsansicht eines erfindungsgemäßen Druckventils mit Ventilplatte 33 und Zylinderdeckel 40 ersichtlich. Das Niederhalterelement 21 ist mit seinen Stiften 15, 16a, 16b in der Ventilplatte 33 befestigt. Der Zylinderdeckel 40 drückt mit einem Steg 57 auf den Mittelbereich des Niederhalters und die Druckventilfeder 23 ist mit ihren Ausnehmungen 24, 25 ,26 im Eingriff mit den Stiften 16a, 16b, 18. Als mögliche Ausführungsvariante ist das Dämpferelement 27 ebenfalls mit seinen Ausnehmungen 29,30,31 im Eingriff mit den Stiften 16a,16b,18 sowie 15 des Niederhalterelementes 21. Zylinderdeckel 40 sowie Ventilplatte 33 sind beispielsweise mittels Schrauben verbunden. Die richtige Ausrichtung der beiden Elemente erfolgt so, dass die beiden abgeschrägten Ecken 39 und 43a übereinander zu liegen kommen.

Nachstehend erfolgt eine genauere Beschreibung eines Verdichtungsvorganges, wobei die Funktionsweise der Druckventilfeder erläuternd beschrieben wird.

Nachdem über das Saugrohr (nicht dargestellt) und die Saugbohrung 37 der Ventilplatte 33 das zu verdichtende Medium angesaugt wurde, erfolgt der entsprechende Kolbenhub um das Medium zu verdichten. Dabei wird das zu verdichtende Medium von unten gegen die Ventilplatte 33 gedrückt und somit auch gegen die Druckventilbohrung mit dem Druckventilsitz 34. Der Endbereich 22a der Druckventilfeder 23 biegt sich durch den aufgebauten Mediumdruck von der Ventilplatte weg und wird dabei wahlweise aber nicht notwendigerweise von dem darüber angeordneten Dämpferelement 27 gebremst. Das verdichtete Medium strömt in das vom Zylinderdeckel 40 umschlossene Volumen, verlässt dieses über die Ausströmöffnung 60 und wird so wieder dem Mediumkreislauf zugeführt.

## Patentansprüche

1. Druckventil für einen Verdichter, insbesondere eine hermetisch gekapselte Kleinkältemaschine, das folgende Elemente umfasst: eine Ventilplatte (33), einen eine im wesentlichen viereckige Grundplatte mit angeformten Zylinderwänden, umfassenden Zylinderdeckel (40), wobei Ventilplatte (33) und Zylinderdeckel (40) mittels Befestigungselemente miteinander verbunden sind, sowie eine dazwischen angeordnete Dichtung (58) und im von der Ventilplatte (33) und dem Zylinderdeckel (40) eingeschlossenen Volumen angeordnet eine Ventilfeder (23), ein im wesentlichen u-förmiges, Stifte aufweisendes Niederhalterelement (21) mit ausgewinkelten Schenkeln und wahlweise ein Dämpferelement (27), wobei die Ventilfeder, das Dämpferelement und das Niederhalterelement, in dieser Reihenfolge über einem Ventilsitz angeordnet sind, **dadurch gekennzeichnet, daß** die Ventilplatte (33) plan ausgeführt ist und Bohrungen (36) aufweist und am Niederhalterelement (21) zu den Bohrungen (36) korrespondierende Stifte (15,16a,16b) ausgebildet sind, wobei der Abstand der Stifte (15,16a,16b) voneinander gegenüber dem Abstand der Bohrungen (36) voneinander geringfügig verschieden ist, so daß beim Aufstecken auf die Ventilplatte (33) eine Vorspannung des Niederhalterelementes stattfindet, die das Halten der Elemente auf der Ventilplatte garantiert.

2. Druckventil nach Anspruch 1, **dadurch gekennzeichnet, daß** der Normalabstand zwischen der Oberseite des erhöhten Mittelbereiches (21a) des Niederhalterelementes (21) und der Auflageebene der Endbereiche (19,20) des Niederhalterelementes (21) mindestens gleich groß oder größer dem bei zusammengebauten Druckventil lichten Abstand zwischen dem Mittelteil des Zylinderdeckels (40) und der Auflageebene der Endbereiche (19,20) des Niederhalterelementes (21) ist, um vom Zylinderdeckel (40) einen Niederhaltedruck auf den Mittelteil (21a) des Niederhalterelementes (21) auszuüben.

3. Druckventil nach einem der Ansprüche 1 bis 3, **dadurch gekennzeichnet, dass** die Endbereiche (19, 20) des Niederhalterelements (21) unterschiedlich geformt sind, vorzugsweise gabelartig (19) bzw. zungenartig (20).

4. Druckventil nach einem der Ansprüche 1 bis 4, **dadurch gekennzeichnet, dass** die Stifte des Niederhalterelements (21) in dessen Endbereichen 19,20 angeordnet sind und sich in die entgegengesetzte Richtung der Schenkel des im wesentlichen u-förmigen Querschnittes des Niederhalterelementes (21) erstrecken.

5. Druckventil nach einem der Ansprüche 1 bis 5, **dadurch gekennzeichnet, dass** im Endbereich (20) des Niederhalters (21) Stifte (15, 17) und im Endbereich (19) je ein Stift (16a, 16b, 18) an den zinkenartigen Ausformungen angeordnet ist.

6. Druckventil nach einem der Ansprüche 1 bis 6, **dadurch gekennzeichnet, dass** die Ventilfeder (23) in ihrem einen Endbereich (22) randoffene Ausnehmungen (24, 25, 26) aufweist, die zur Aufnahme der Stifte (16a, 16b, 18) im gabelartigen Endbereich (19) des Niederhalterelements (21) dienen.

7. Druckventil nach einem der Ansprüche 1 bis 7, **dadurch gekennzeichnet, dass** das vorzugsweise Dämpferelement (27) in seinem einen Endbereich 28 aufgebogen ist und Ausnehmungen (29, 30, 31) aufweist, die zur Aufnahme der Stifte (16a,16b,18) im gabelartigen Endbereich (19) des Niederhalterelementes (21) dienen.

8. Druckventil nach einem der Ansprüche 1 bis 8, **dadurch gekennzeichnet, dass** das Dämpferelement (27) in seinem anderen Endbereich (28a) in die entgegengesetzte Richtung des einen Endbereichs (28) aufgebogen ist und eine Ausnehmung (32) aufweist, die zur Aufnahme des Stiftes (15) im zungenartigen Endbereich (20) des Niederhalterelementes (21) dient.

## Claims

1. A pressure valve for a compressor, especially a hermetically encapsulated small-size refrigeration machine, comprising the following elements: a valve plate (33), a cylinder lid (40) comprising a substantially square base plate with cylinder walls formed thereon, with the valve plate (33) and the cylinder lid (40) being mutually connected by means of fastening elements, as well as an interposed seal (58) and, arranged in the volume as enclosed by the valve plate (33) and the cylinder lid (40), a valve reed (23), a substantially U-shaped holding-down member (21) comprising pins and bent-out legs and optionally a damping member (27), with the valve reed, damping member and the holding-down member being arranged in this sequence above a valve seat, **characterized in that** the valve plate (33) is arranged planarly and comprises bores (36) and pins (15, 16a, 16b) are arranged on the holding-down member (21) which correspond to the bores (36), with the distance of the pins (15, 16a, 16b) from each other being slightly different from the distance of the bores (36) from each other, so that during the insertion on the valve plate (33) a pretensioning of the holding-down member occurs which guarantees the fixing of the members on the valve plate.

2. A pressure valve as claimed in claim 1, **characterized in that** the normal distance between the upper side of the elevated middle zone (21a) of the holding-down member (21) and the bearing plane of the end zones (19, 20) of the holding-down member (21) is at least as large as or larger than the clearance when the pressure valve is assembled between the middle part of the cylinder lid (40) and the bearing plane of the end zones (19, 20) of the holding-down member (21) in order to exert by the cylinder lid (40) a holding-down pressure on the middle part (21a) of the holding-down member (21).

3. A pressure valve as claimed in one of the claims 1 to 3, **characterized in that** the end zones (19, 20) of the holding-down member (21) are shaped differently, preferably like a fork (19) or a tongue (20).

4. A pressure valve as claimed in one of the claims 1 to 4, **characterized in that** the pins of the holding-down member (21) are arranged in its end zones (19, 20) and extend in the opposite direction of the legs of the substantially U-shaped cross section of the holding-down member (21).

5. A pressure valve as claimed in one of the claims 1 to 5, **characterized in that** pins (15, 17) are arranged in the end zone (20) of the holding-down member (21) and one pin each (16a, 16b, 18) is arranged in the end zone (19) on the prong-like shaped parts.

6. A pressure valve as claimed in one of the claims 1 to 6, **characterized in that** the valve reed (23) is provided with recesses (24, 25, 26) in its one end zone (22) which are used for receiving pins (16a, 16b, 18) in the fork-like end zone (19) of the holding-down member (21).

7. A pressure valve as claimed in one of the claims 1 to 7, **characterized in that** the preferable damping member (27) is bent up in its one end zone (28) and is provided with recesses (29, 30, 31) which are used for receiving the pins (16a, 16b, 18) in the fork-like end zone (19) of the holding-down member (21).

8. A pressure valve as claimed in one of the claims 1 to 8, **characterized in that** the damping member (27) is bent up in its other end zone (28a) in the opposite direction of the one end zone (28) and is provided with a recess (32) which is used for receiving the pin (15) in the tongue-like end zone (20) of the holding-down member (21).

## Revendications

1. Soupape de refoulement pour un compresseur, en particulier une petite machine frigorifique encapsulée hermétiquement, comprenant les éléments suivants : une plaque de soupape (33), un couvercle de cylindre (40) comprenant une plaque de base sensiblement quadrangulaire, ayant des parois de cylindre formées sur elle d'un seul tenant, la plaque de soupape (33) et le couvercle de cylindre (40) étant reliés ensemble à l'aide d'éléments de fixation, ainsi qu'un joint d'étanchéité (58) disposé entre eux, et un ressort de soupape (23) disposé dans le volume enclos par la plaque de soupape (33) et le couvercle de cylindre (40), un élément abaisseur (21) présentant des tiges, sensiblement en forme de U, avec des branches coudées et, au choix, un élément amortisseur (27), le ressort de soupape, l'élément amortisseur et l'élément abaisseur étant disposés dans cet ordre de succession sur un siège de soupape, **caractérisée en ce que** la plaque de soupape (33) est plane et présente des perçages (36) et sur l'élément abaisseur (21), étant réalisées des tétons (15, 16a, 16b) correspondant aux perçages (36), l'espacement mutuel entre les tétons (15, 16a, 16b) étant légèrement différent de l'espacement entre les perçages (36) de sorte que, lors de l'emboîtement sur la plaque de soupape (33), se produit une précontrainte de l'élément abaisseur, qui garantit le maintien des éléments sur la plaque de soupape.

2. Soupape de refoulement selon la revendication 1, **caractérisée en ce que** l'espacement normal, entre la face supérieure de la zone médiane (21a) en relief de l'élément abaisseur (21) et le plan de pose des zones d'extrémité (19, 20) de l'élément abaisseur (21), est au moins égal ou supérieur à la distance libre, lorsque la soupape de refoulement est assemblée, existant entre la partie centrale du couvercle de cylindre (40) et le plan de pose des zones d'extrémité (19, 20) de l'élément abaisseur (21), afin de faire exercer par le couvercle de cylindre (40) une pression de rappel à la position abaissée sur la partie centrale (21a) de l'élément abaisseur (21).

3. Soupape de refoulement selon l'une des revendications 1 à 2, **caractérisée en ce que** les zones d'extrémité (19, 20) de l'élément abaisseur (21) sont de forme différente, de préférence en forme de fourche (19) ou en forme de languette (20).

4. Soupape de refoulement selon l'une des revendications 1 à 3, **caractérisée en ce que** les tétons de l'élément abaisseur (21) sont disposés dans ses zones d'extrémité (19, 20) et s'étendent dans la direction opposée des branches de la section transversale, sensiblement en forme de U, de l'élément abaisseur (21).

5. Soupape de refoulement selon l'une des revendications 1 à 4, **caractérisée en ce que**, dans la zone d'extrémité (20) de l'élément abaisseur (21), sont disposés des tétons (15, 17) et dans la zone d'extrémité (19), est disposé chaque fois un téton (16a, 16b, 18), sur les bossages du genre de dents.

6. Soupape de refoulement selon l'une des revendications 1 à 5, **caractérisée en ce que** le ressort de soupape (23) présente des évidements (24, 25, 26) ouverts en bordure dans une de ses zones d'extrémité (22), évidements servant à loger les tétons (16a, 16b, 18) dans la zone d'extrémité (19), du genre d'une fourche, de l'élément abaisseur (21).

7. Soupape de refoulement selon l'une des revendications 1 à 6, **caractérisée en ce que**, de préférence, l'élément amortisseur (27) est coudé dans une de ses zones d'extrémité (28) et présente des évidements (29, 30, 31) servant à loger les tétons (16a, 16b, 18) dans la zone d'extrémité (19), du genre d'une fourche, de l'élément abaisseur (21).

8. Soupape de refoulement selon l'une des revendications 1 à 7, **caractérisée en ce que** l'élément amortisseur (27), dans son autre zone d'extrémité (28a), est coudé dans la direction opposée à celle de la première zone d'extrémité (28) et présente un évidement (32) servant à loger le téton (15) dans la zone d'extrémité (20), du genre d'une languette, de l'élément abaisseur (21).
